# EUROPEAN PATENT APPLICATION

(11) **EP 2 610 787 A1**
(43) Date of publication of application: **03.07.2013**
(21) Application number: 11819322.6
(22) Date of filing: 18.05.2011
(51) Int. Cl.: G06Q 10/00

(54) **METHOD AND DEVICE FOR DISPLAYING EMAIL INFORMATION**

(30) Priority: 26.08.2010 CN 201010265457
(71) Applicant: Huizhou TCL Mobile Communication Co., Ltd., Huizhou, Guangdong 516006 (CN)
(72) Inventor: ZHOU, Baozhong, Guangdong 516006 (CN)
(74) Representative: Brachmann, Roland W.
(86) International application number: PCT/CN2011/074269
(87) International publication number: WO 2012/024947

(57) **Abstract**

A method and a device for displaying the email information are disclosed, belonging to the email receiving and transmitting technical field. The method comprises: acquiring the email display information by an email interface; calling a text display interface; and displaying the acquired display information to a user in the coding format of Unicode when the user selects the email. In the solution, the email display information is acquired by the email interface firstly, the text display interface is called, and the acquired display information is displayed to the user in the coding format of Unicode when the user selects the email. Because Unicode is an important general purpose character coding standard for interacting and displaying, the solution conveniently transmits and receives the emails of different languages.

## Description

### Technical field of the invention

The present invention relates to the technical field of email sending and receiving, and in particular to a method and device for displaying the information of an email.

### Background of the invention

With the continuous popularization of email boxes, users have increasing requirements on functions of email boxes.

For the existing email boxes, during the process of sending and receiving emails, after the display language is set, it is fundamentally unable to modify the setup, as a result, when an email is sent to different nations or areas in different languages, a language barrier when the email is displayed is caused between the addresser and the addressee.

How to provide a universal code and display way to bring convenience to the use of the email addresser and addressee in different languages is one of research directions of the technical field of email sending and receiving.

### Summary of the invention

An object of the present invention is to provide a method for displaying the information of an email, in order to provide a universal code and display way to bring convenience to the use of the email addresser and addressee in different languages.

The embodiment of the invention is implemented as follows: a method for displaying the information of an email is provided, and the method comprises the following steps:
- obtaining email display information through an email agent;
- invoking a text display interface;
- displaying the obtained display information to a user in a coded format of Unicode when the user selects the email.

Another object of the embodiment of the invention is to provide a device for displaying the information of an email which comprises:
- an email display information obtaining module, configured to obtain email display information through an email agent;
- a text display interface invoking module, configured to invoke a text display interface;
- a display module, configured to display the obtained display information to a user in a coded format of Unicode when the user selects the email.

In the embodiment of the invention, firstly email display information is obtained through an email agent; a text display interface is invoked; the obtained display information is displayed to a user in a coded format of Unicode when the user selects the email. As Unicode is an important universal character coding standard for interaction and display, the invention brings great convenience to the use of email senders and receivers in different languages, and brings great convenience to the use of users.

### Brief description of the drawings

- Fig.1: is a flow chart of a method for displaying the information of an email, provided in the embodiment of the invention;
- Fig.2: is a structure diagram of a device for displaying the information of an email, provided in the embodiment of the invention.

### Detailed description of the invention

To make the objects, technical solutions and advantages of the invention more clear, the invention will be further described in details below with reference to drawings and embodiments. It should be understood that specific embodiment described herein is only used for explaining the invention, instead of limiting the invention.

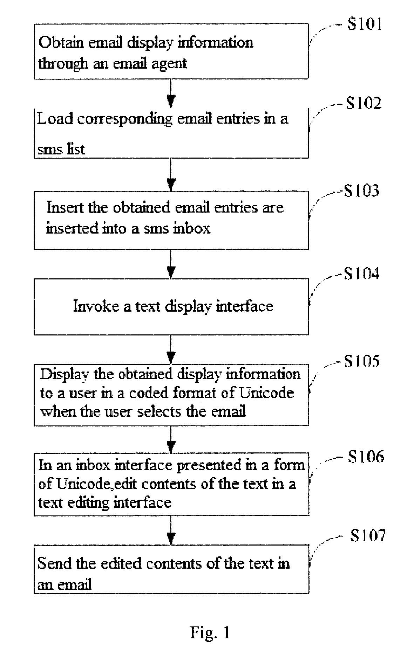

Fig.1 illustrates a flow of a method for displaying the information of an email, provided in the embodiment of the invention.

In step S101, email display information is obtained through an email agent; preferably, the email display information includes: information of an addresser, email address of a user, information of corresponding Ccs(carbon copies), information of a subject of the email, names of attachments of the email, information of a body of the email, and information of a sending time of the email.

In step S102, corresponding email entries are loaded in a sms list.

In step S 103, the obtained email entries are inserted into a sms inbox.

In step S104, a text display interface is invoked.

In step S105, the obtained display information is displayed to the user in a coded format of Unicode when the user selects the email.

In step S106, in the inbox interface presented in a form of Unicode, contents of the body are edited in a text editing interface;

In step S107, the edited contents of the body are sent in an email.

For example, take the flow displayed in Inbox text way as example, each display information flow is described as follows:
a. addresser:
   mmi_email_read_goto_addr->mmi_email_entry_read_addr->mmi_email_read_get_a ddr_list;
   information of a corresponding addresser is obtained by use of the email agent and displayed in a coded format of Unicode;
b. addressee:
   an email box address of a user is obtained according to configuration of a current effective email profile and presented in a coded format of Unicode;
c. Ccs:
   information of corresponding Ccs is obtained by use of the email agent and displayed in a coded format of Unicode;
d. subject:
   information of subject of the email is obtained by use of the email agent and displayed in a coded format of Unicode;
e. names of attachments of the email:
   names of attachments of the email are obtained by use of the email agent, but it is unnecessary to load attachments herein, instead, it is only needed to display the names of attachments in a coded format of Unicode;
f. body of email:
   information of a body of an email is obtained by use of the email agent, and the text contents of the body are converted and displayed in a coded format of Unicode, it is unnecessary to load other contents, such as pictures, formats and tables;
g. sending time:
   information of the sending time of the email is obtained by use of the email agent and
   displayed in a coded format of Unicode.

After the above information is obtained, corresponding email entries are loaded in a sms list and inserted into a sms inbox, a text display interface is invoked and the above seven parts of contents are displayed when the user selects the email, in order to present the contents of the email in Unicode text.

Take the flow displayed in Outbox reply text as example, the sending flow is described as follows:
option-> replay function is set in the inbox; in the inbox interface presented in text mode, for the addresser, information of the addressee has been obtained, and contents of the body are edited in a text editing interface; information required to send the email, addressee, and sending configuration are selected; and the email is sent by using the primary flow mechanism.

As an important universal character coding standard for interaction and display, Unicode covers languages of America, Europe, Middle East, Africa, India, Asia and The Pacific, and ancient prose and specialized symbols. Unicode allows exchange, disposal and display of multi-language texts and public specialized and mathematic symbols, therefore, no matter which nation the email addresser and addressee stay, the use of the email addresser and addressee is facilitated.

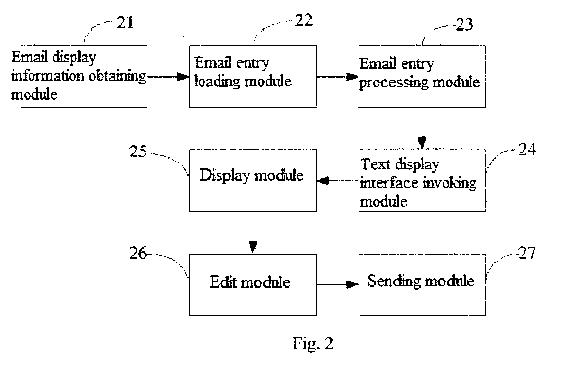

Fig.2 illustrates a structure of a device for displaying the information of an email, provided in an embodiment of the invention.

Wherein, the email display information obtaining module 21 is configured to obtain email display information through an email agent;
the email display information comprises: information of an addresser, email address of a user, information of corresponding Ccs, information of a subject of the email, names of attachments of the email, information of a body of the email, and information of a sending time of the email;
email entry loading module 22 is configured to load corresponding email entries in a sms list;
email entry processing module 23 is configured to insert the obtained email entries into a sms inbox;
text display interface invoking module 24 is configured to invoke a text display interface;
display module 25 is configured to display the obtained display information to a user in a coded format of Unicode when the user selects the email;
edit module 26 is configured to, in an inbox interface presented in a form of Unicode, edit contents of the body in a text editing interface;
sending module 27 is configured to send the edited contents of the body in an email.

Wherein, in the inbox interface presented in text mode, for the addresser, information of an addressee has been obtained, and the contents of the body are edited in a text editing interface; information required to send the email, the addressee and sending configuration are selected; and the email is sent by using the primary flow mechanism.

In the embodiment of the invention, firstly email display information is obtained through an email agent; a text display interface is invoked; the obtained display information is displayed to the user in a coded format of Unicode when the user selects the email. As Unicode is an important universal character coding standard for interaction and display, the invention brings great convenience to the use of email senders and receivers in different languages, and brings great convenience to the use of users.

It should be understood that, for those skilled in the art, the invention may have modifications or alternations according to the above description, and these modifications and alternations all fall into the protection scope defined by the claims of the invention.

## Claims

1. A method for displaying information of an email, comprising the following steps:
- obtaining email display information through an email agent;
- invoking a text display interface;
- displaying the obtained display information to a user in a coded format of Unicode when the user selects the email.

2. The method for displaying information of an email according to claim 1, **characterized in that** the email display information comprises:
- information of an addresser,
- email address of the user,
- information of corresponding Carbon Copies,
- information of a subject of the email,
- names of attachments of the email,
- information of a body of the email, and
- information of a sending time of the email.

3. The method for displaying information of an email according to claim 1, **characterized in that**, after the step of obtaining email display information through an email agent, the method further comprises:
- loading corresponding email entries in a sms list;
- inserting the obtained email entries into a sms inbox.

4. The method for displaying information of an email according to claim 1, **characterized in that** the method further comprises:
- in an inbox interface presented in a form of Unicode, editing contents of a body in a text editing interface;
- sending the edited contents of the body in an email.

5. A device for displaying information of an email, **characterized in that** the device comprises:
- an email display information obtaining module, configured to obtain email display information through an email agent;
- a text display interface invoking module, configured to invoke a text display interface;
- a display module, configured to display the obtained display information to a user in a coded format of Unicode when the user selects the email.

6. The device for displaying information of an email according to claim 5, **characterized in that** the email display information comprises:
- information of an addresser,
- email address of the user,
- information of corresponding Carbon Copies,
- information of a subject of the email,
- names of attachments of the email,
- information of a body of the email, and
- information of a sending time of the email.

7. The device for displaying information of an email according to claim 5, **characterized in that** the device further comprises:
- an email entry loading module, configured to load corresponding email entries in a sms list;
- an email entry processing module, configured to insert the obtained email entries into a sms inbox.

8. The device for displaying information of an email according to claim 5, **characterized in that** the device further comprises:
- an edit module, configured to, in an inbox interface presented in a form of Unicode, edit contents of a body in a text editing interface;
- a sending module, configured to send the edited contents of the body in an email.
